# EUROPEAN PATENT SPECIFICATION

(11) **EP 4 201 551 B1**
(45) Date of publication and mention of the grant of the patent: **15.05.2024**
(21) Application number: 21383226.4
(22) Date of filing: 27.12.2021
(51) Int. Cl.: B21D 43/18, B30B 15/30, B25J 19/00, B25J 15/06, B21D 43/05, B30B 15/00, B30B 15/32

(54) **CONVEYOR APPARATUS FOR A PRESS INSTALLATION**
FÖRDERVORRICHTUNG FÜR EINE PRESSENANLAGE
APPAREIL DE TRANSPORT POUR UNE INSTALLATION DE PRESSE

(43) Date of publication of application: 28.06.2023
(73) Proprietor: FAGOR ARRASATE, S.COOP., 20500 Arrasate (ES)
(72) Inventor: SAINZ GOMEZ, Iban, 20500 Arrasate - Mondragon (ES); SARASUA MARITXALAR, Oier, 20500 Arrasate - Mondragon (ES); GARRO ARRILLAGA, Aitor, 20500 Arrasate - Mondragon (ES); IGLESIAS RAMOS, Sr., Alexander, 20870, Elgoibar (Gipuzkoa) (ES)
(74) Representative: Igartua, Ismael

(56) References cited:
- EP-A1- 0 685 276
- CN-A- 106 862 410
- JP-A- 2004 216 452
- JP-A- 2020 040 118
- KR-A- 20110 119 235
- US-A- 5 688 103

## Description

### TECHNICAL FIELD

The present invention relates to conveyor apparatuses, in particular to conveyor apparatuses used in press installations comprising a plurality of stations and in which conveyor apparatuses are used for conveying workpieces between stations.

### PRIOR ART

Presses are used to shape workpieces such as metal sheets in order to give them the required shape by means of press strokes. In some cases, a plurality of pressing steps are required to obtain the final objects with the desired shape (such as parts of a vehicle, for example), so there are installations comprising a plurality of presses, each of said steps taking place in a different press of the installation. The presses can be of different types, and all the presses of one and the same installation can be of the same type or they can represent a combination of different types. The installations may comprise, in addition to presses, other stations in which the pieces are arranged for another repositioning, for example.

For example, the workpiece is arranged in a first station of a press installation for a pressing step, and once said step has ended, the workpiece is conveyed to another press for the next pressing step. These steps are repeated as many times as there are steps required in one and the same press installation, until completing the entire process and obtaining the desired object from the workpiece as a result. To convey workpieces from one press to another within one and the same installation, articulated arms, robots, or known conveyor apparatuses of another type are used.

The press or station receiving a workpiece comprises a support surface on which said workpiece is arranged, which can generally be a support surface of a lower die with a specific configuration. This support surface cooperates with another surface (of an upper die), and the workpiece is pressed between both surfaces thereby imparting to said workpiece the desired shape (which depends on the configuration of said surfaces). As a result, precision when placing a workpiece on the support surface is extremely important because if it is not accurately placed in the required position, the shape acquired after the corresponding pressing step may not be the required shape, and said workpiece must be disposed of. While conveying a workpiece by means of the corresponding conveyor apparatus, the workpiece may be exposed to undesired vibrations which may affect this described arrangement on the corresponding support surface. Vibrations are generated on the conveyor apparatus, or in the conveyor apparatus itself, which are transferred to the workpiece held by said conveyor apparatus. As a result, in addition to requiring a precise control over the actual conveyance of the workpiece (control over the movement provided by the conveyor apparatus), vibrations which may arise during said movement and may affect said placement of the workpiece should be taken into account.

Solutions which take these vibrations into account are already known. For example, EP0685276A1 discloses a conveyor apparatus configured for conveying workpieces from a first press to a second press of an installation of presses. The conveyor apparatus comprises two facing longitudinal guiding supports, a crossbar transverse to a first end associated with a first guiding support and a second end associated with a second guiding support, and a plurality of tools attached to the crossbar and each one comprising a plurality of suction cups suitable for holding the workpiece to be conveyed. The transverse crossbar is moved from one press to the other press guided by the guiding supports in a forward movement direction. This configuration of the conveyor apparatus allows a reduction of vibrations, due to the stabilization provided by the longitudinal guiding supports. However, it is not enough, and sensors are incorporated for detecting possible vibrations that may be generated. The sensors are communicated with a control unit, and the control unit incorporates in the control over the movement of the conveyor apparatus the signals received from said sensors in order to take them into account and try to correct the movement to eliminate or mitigate the generation of vibrations. Although it is a good solution *a priori*, this manner of acting may delay control, so there is not a precise monitoring of the path of the conveyor apparatus.

KR20110119235A discloses a workpiece conveying apparatus for a press installation, whereby vacuum absorption ports suck the press material so that said absorbed press material is conveyed to another required position.

JP2020040118A discloses a conveyor apparatus for a press installation according to the preamble of claim 1, the conveyor apparatus being configured for conveying at least one workpiece from a first station to a second station of the press installation. The conveyor apparatus comprises a crossbar and at least a first tool and a second tool attached to the crossbar, each of said tools comprising a plurality of suction cups for holding the workpiece to be conveyed.

### DISCLOSURE OF THE INVENTION

The object of the invention is to provide a conveyor apparatus for a press installation and a press installation, as defined respectively in claims 1 and 13.

The press installation of the invention comprises at least a first station and a second station arranged downstream of the first station in a forward movement direction, and the conveyor apparatus is configured for conveying a workpiece from the first station to the second station. The conveyor apparatus of the invention comprises a support, a crossbar that comprises a longitudinal axis and that is attached to the support, and at least a first tool and a second tool attached to the crossbar and comprising a respective longitudinal axis, each tool comprising a plurality of suction cups for holding the workpiece to be conveyed. The crossbar is suitable for moving at least in the forward movement direction between the first station and the second station for conveying the workpiece between said stations.

The crossbar is supported only by the support and is attached to the support such that said crossbar comprises a first segment on one side of the support and a second segment on the other side of said support. The first tool is attached to the first segment of the crossbar and the second tool is attached to the second segment of the crossbar. This configuration of the conveyor apparatus causes the crossbar not to be supported at the ends thereof, as occurs in the state of the art, such that the first segment and the second segment are cantilevered.

The conveyor apparatus comprises at least one compensation block attached to at least one element of the conveyor apparatus selected from the crossbar, the first tool, and the second tool. Said compensation block comprises a configuration which passively and at least partially compensates for the vibrations generated at least in the element to which it is attached during the movement of the crossbar, such that the vibrations reaching the workpiece are reduced or eliminated.

Therefore, vibrations which may be transmitted to the workpiece are at least partially compensated for with the compensation block, and this is particularly useful when the workpiece is to be placed in the second station or when a workpiece is to be picked up from the first station, and this is achieved avoiding the problems from the state of the art related to the loss of monitoring of the path of the conveyor apparatus by the control over said path, as no control whatsoever in relation to vibrations is required, such that said path is kept as required or programmed at all times, while at the same time solving the problem derived from vibrations.

The compensation block is fixed to the corresponding element of the conveyor apparatus by means of a structure, and comprises, in addition to the structure, a floating mass, at least one damper associated with the structure and with the floating mass, and at least one elastic element fixed to the floating mass and to the structure.

These and other advantages and features of the invention will become apparent in view of the figures and detailed description of the invention.

### DESCRIPTION OF THE DRAWINGS

Figure 1 shows a press installation with a plurality of stations and, between each two stations, an embodiment of the conveyor apparatus according to the invention.
Figure 2 shows a plan view of the installation of Figure 1.
Figure 3 shows a perspective view of an embodiment of the conveyor apparatus according to the invention.
Figure 4 shows part of the conveyor apparatus of Figure 3.

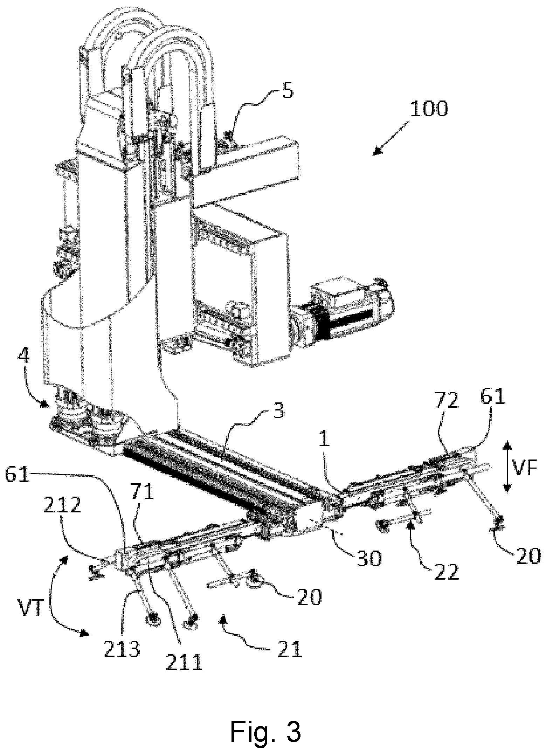

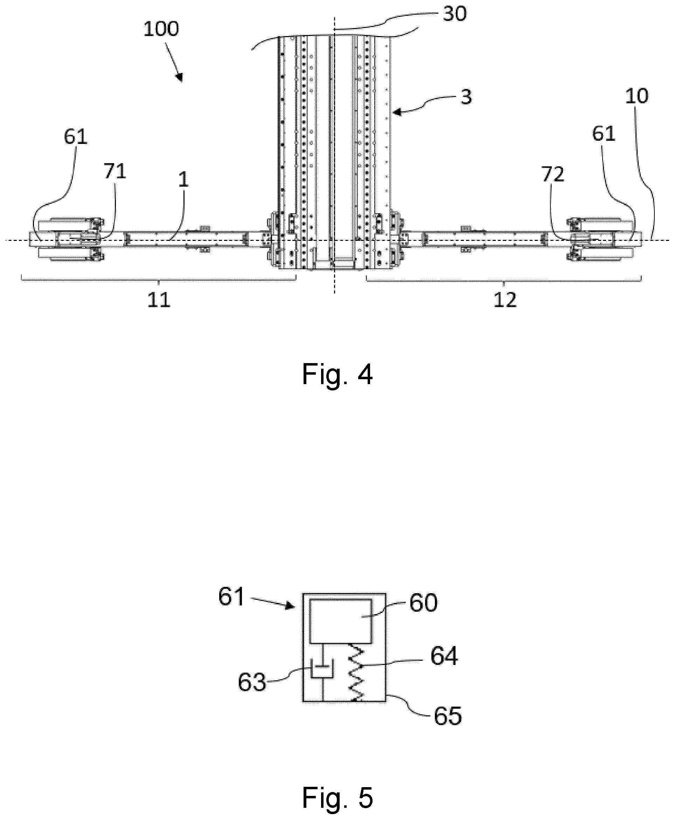

Figure 4 shows a plan view part of the conveyor apparatus of Figure 3, without tools.
Figure 5 schematically shows a compensation block of the conveyor apparatus of Figure 3.

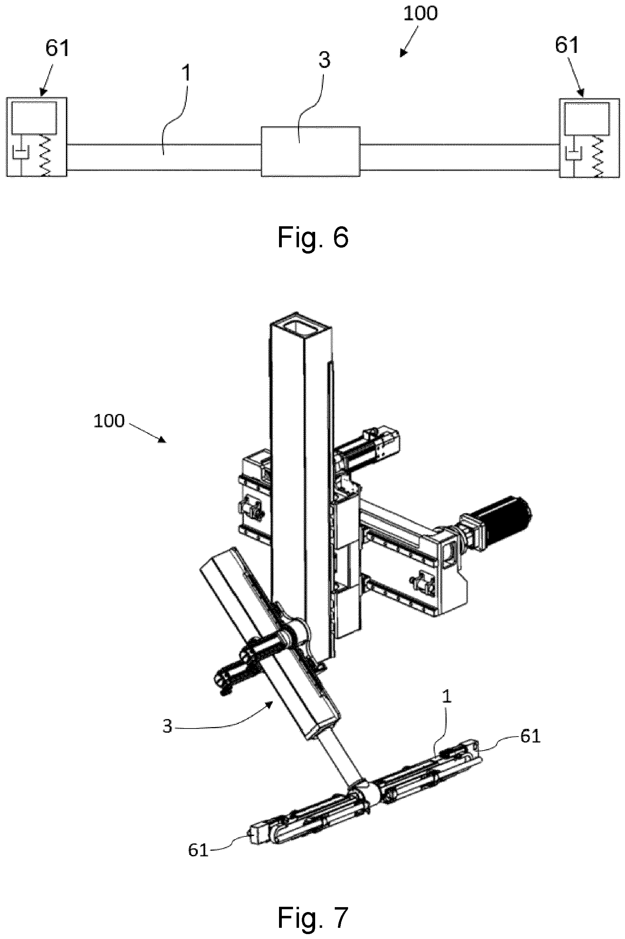

Figure 6 schematically shows a crossbar of the conveyor apparatus of Figure 3, with two compensation blocks.
Figure 7 shows another embodiment of a conveyor apparatus according to the invention.

### DETAILED DISCLOSURE OF THE INVENTION

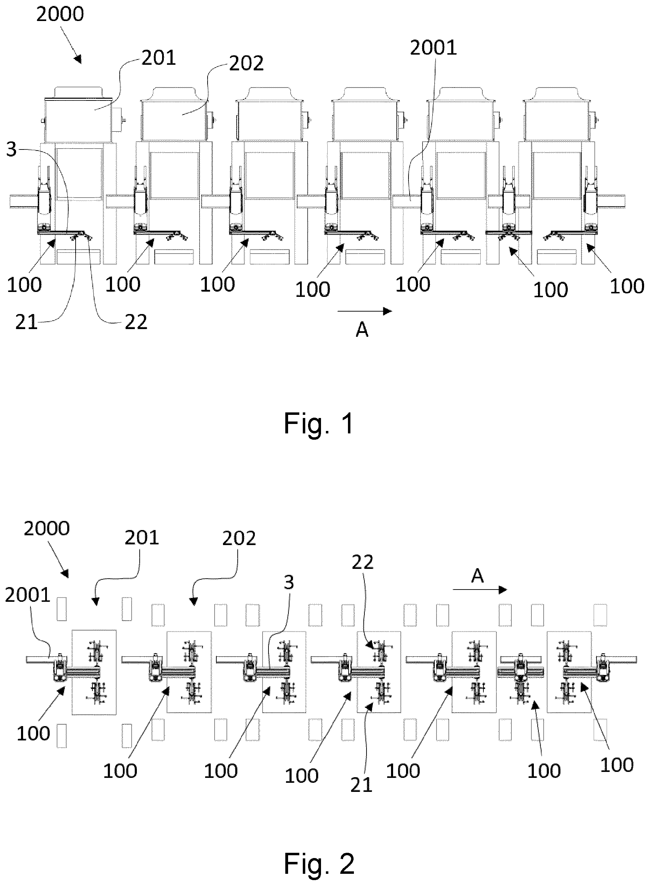

The press installations 2000, as the one shown by way of example in Figures 1 and 2, comprise a plurality of stations distributed in a forward movement direction A, and the conveyor apparatus 100 of the invention is suitable for conveying workpieces at least between said stations. In at least one of these stations, the installation 2000 comprises a press for performing a pressing operation on the workpiece, in which said workpiece is caught between an upper die and a lower die of said station.

The installation 2000 preferably comprises a conveyor apparatus 100 for conveying workpieces between each two stations. A conveyor apparatus 100 is therefore configured for conveying a workpiece between a first station 201 and a second station 202 arranged downstream of the first station 201 in a forward movement direction A of a press installation 2000. The conveyor apparatus 100 is associated with a structure 2001 of the installation 2000, and said installation 2000 preferably comprises a structure 2001 between every two presses 201 and 202 to support a conveyor apparatus 100.

Figures 3 and 4 show an embodiment of the conveyor apparatus 100. Said conveyor apparatus 100 comprises a support 3, a crossbar 1 that comprises a longitudinal axis 10 and that is attached to the support 3, and at least a first tool 21 and a second tool 22 attached to the crossbar 1 and comprising a respective longitudinal axis. Each tool 21 and 22 comprises a plurality of suction cups 20 for holding the workpiece to be conveyed, and the crossbar 1 is suitable for moving at least in the forward movement direction A and between the first station 201 and the second station 202, for conveying the workpiece between said stations 201 and 202.

In the embodiment of Figures 3 and 4, the first tool 21 (like the second tool 22) comprises two longitudinal bars 211 and 212, extending in parallel to the longitudinal axis 10 of the crossbar 1, each longitudinal bar being attached on one side of the crossbar 1 in the forward movement direction A. Furthermore, the first tool 21 (like the second tool 22) comprises a plurality of arms 213 extending from each of the longitudinal bars 211 and 212, each arm 213 comprising a suction cup 20 preferably associated at its end farthest away from the corresponding longitudinal bar 211 and 212. The longitudinal axis of a tool 21 and 22 can be interpreted as the longitudinal axis of any of the longitudinal bars, for example, or another longitudinal axis centered with respect to said longitudinal bars and parallel to said longitudinal bars (in which case it would coincide with the longitudinal axis 10 of the crossbar 1).

The crossbar 1 is supported only by the support 3 and is attached to the support 3 such that said crossbar 1 comprises a first segment 11 on one side of the support 3 and a second segment 12 on the other side of said support 3. Both segments 11 and 12 of the crossbar 1 are thereby not supported (with the exception of the association with the support 3) and are cantilevered. The length of both segments 11 and 12 is preferably the same. Both segments 11 and 12 are aligned, sharing the longitudinal axis 10. The crossbar 1 can be a single element attached to the support 3, or both segments 11 and 12 can be two different elements attached to the support 3.

The first tool 21 is attached to the first segment of the crossbar 1, and the second tool 22 is attached to the second segment 12 of the crossbar 1, such that the workpiece can be picked up uniformly as required, or even more than one workpiece can be picked simultaneously (one with each tool 21 and 22, for example).

The conveyor apparatus 100 further comprises at least one compensation block 61 attached to at least one element of the conveyor apparatus 100 selected from the crossbar 1, the first tool 21 and the second tool 22. Said compensation block 61 comprises a configuration which passively and at least partially compensates for the vibrations generated at least in the element to which it is attached during the movement of the crossbar 1. Since the vibrations of these elements are translated to the workpiece held by the conveyor apparatus 100, eliminating or reducing these vibrations has a positive effect on the workpiece, and said workpiece is placed more securely where required. Likewise, the operation of picking up a workpiece is also performed in a more secure manner. The arrangement of the suction cups 20 is previously set depending on the workpiece to be picked up, so eliminating or reducing these vibrations allows the suction cups 20 of the conveyor apparatus 100 to be in the required position when holding the workpiece in a more precise manner.

Using a compensation block 61 that passively reduces or eliminates vibrations involves an absence of sensors and control over the compensation or elimination of vibrations, which prevents the problems of the state of the art relating to the loss of monitoring of the path of the conveyor apparatus 100, such that said path is kept under control at all times.

The compensation block 61 is fixed to the corresponding element of the conveyor apparatus 100 by means of a structure 65, said compensation block 61 comprising, in addition to the structure 65, a floating mass 60, at least one damper 63 associated with the structure 65 and with the floating mass 60, and at least one elastic element 64 fixed to the floating mass 60 and to the structure 65 (and between said floating mass and said structure 65), as depicted schematically and by way of example in Figure 5. The arrangement of the damper 63 is such that it cooperates in line with the elastic element 64 (in the same direction).

When the element to which the compensation block 61 is attached vibrates, due to the effect of the elastic element 64 and of the damper 63, the mobile mass 60 tends to absorb said vibration (at least partially).

The weight of the mobile mass 60 depends on the total mass of the conveyor apparatus 100, for example, although the workpiece to be conveyed and other elements of the installation could also be considered if deemed appropriate. The same occurs with the characteristics of the damper 63 and of the elastic element 64.

The elastic element 64 can be arranged perpendicular to the longitudinal axis of the element of the conveyor apparatus 100 to which the compensation block 61 is attached. When in standby, the crossbar 1 is arranged horizontally, with its longitudinal axis 10 as well as the longitudinal axis of the tools 21 and 22, being horizontal, such that as a result of the arrangement of the elastic element 64, the compensation block 61 can at least partially compensate for vertical or horizontal vibrations. The elastic element 64 preferably extends vertically, such that the compensation block 61 at least partially compensates for vertical vibrations. During a vertical movement of the crossbar 1, the main vibrations generated are bending vibrations VF and torsional vibrations VT (see Figure 3), which affect the crossbar 1 and the tools 21 and 22, and the embodiment corresponding to the configuration of the compensation block 61 is preferably devised for at least partially compensating for torsional vibrations VT. The center of the torsional vibrations VT is located at the center of the crossbar 1 (in terms of its longitudinal axis 10), i.e., at the center of the support 3 at the height of the crossbar 1.

In some embodiments, the damper 63 is a magnetic damper (not depicted in the figures) and comprises at least one magnet fixed to the mobile mass 60 and a metallic element fixed to the structure 65 of the compensation block 61, said metallic element preferably being a copper element. When the element to which the compensation block 61, 62 is attached vibrates, a magnetic field is generated between the magnet and the metallic element attached to the mobile mass 60, which field, together with the effect of the elastic element 64, helps the mobile mass 60 assembly at least partially compensate for vibrations.

In other embodiments, the damper 63 and the elastic element 64 are arranged in parallel, said damper 63 being an element fixed between the floating mass 60 and the structure 65 of the compensation block 61. The damper 63 can be a hydraulic or another known type of damper.

Preferably, in any of the embodiments, the elastic element 64 has a linear behavior and can be, for example, a spring.

Preferably, as in the case of the embodiment of Figures, the element to which the compensation block 61 is attached is the crossbar 1. Furthermore, the conveyor apparatus 100 preferably comprises a first compensation block 61 attached to the first segment 11 of the crossbar 1 and a second compensation block 61 attached to the second segment 12 of said crossbar 1, as depicted schematically and by way of example in Figure 6. The compensation for vibrations is thereby performed in a balanced manner, such that the two tools 21 and 22 are compensated for in the same way, which has a positive effect on the overall compensation and also on the size and arrangement of the compensation blocks 61. In the event of using a single compensation block 61, a larger floating mass 60 may need to be used, which would also involve having to increase sizes of the damper 63 and of the elastic element 64, and could hinder the arrangement of the compensation block 61. Using two compensation blocks 61 allows the necessary mass to be distributed between the two, having two compensation blocks 61 that have smaller dimensions and are easier to arrange in the conveyor apparatus 100.

In these cases, furthermore, the first compensation block 61 and the second compensation block 61 are preferably attached to the side of a respective end of the crossbar 1, as depicted in Figure 6. In this arrangement, the mobile mass 60 to be used is smaller than in another arrangement because the center of the main vibrations to be compensated for is in the support 3.

The conveyor apparatus 100 may further comprise a first tool actuator 71 attached to the crossbar 1 for being able to move the first tool 21 with respect to the crossbar 1 (in a direction parallel to the longitudinal axis 10 of the crossbar 1) and a second tool actuator 72 attached to the crossbar 1 for being able to move the second tool 22 with respect to the crossbar 1 (in the direction parallel to the longitudinal axis 10 of the crossbar 1). This allows the tools 21 and 22 to be adjusted depending on the shape of the workpiece to be conveyed. In these cases, the first tool actuator 71 can be arranged above the crossbar 1 (attached to the first segment 11 of the crossbar 1), and the second tool actuator 72 can be arranged above the crossbar 1 (attached to the second segment 12 of the crossbar 1). With this arrangement of the actuators 71 and 72, it is thereby possible to arrange the compensation blocks 61 on the sides of the crossbar 1 in a simple manner since said ends are free, as described earlier.

In some cases, each tool 21 and 22 may comprise at least one compensation block 61 such as those described above, preferably two: one at each end (attached to the corresponding side). The conveyor apparatus 100 may further comprise at least one compensation block 61 in the crossbar 1 and at least one compensation block 61 in each tool 21 and 22.

In some embodiments, such as the one shown in the figures, the support 3 is a beam which is configured for being attached to a structure of the press installation 2000 with which the conveyor apparatus 100 is associated with freedom of movement. The support 3 comprises a longitudinal axis 30 extending in the forward movement direction A and transverse to the longitudinal axis 10 of the crossbar 1. The conveyor apparatus 100 comprises a first linear actuator 4 (shown in Figure 3) configured for longitudinally moving the crossbar 1 with respect to the support 3 in the forward movement direction A, and a second linear actuator 5 (shown in Figure 3) configured for causing the vertical movement of the support 3 and, therefore, of the crossbar 1 integral with said support 3, and the compensation block 61 comprises a configuration which passively and at least partially compensates for the vibrations generated at least in the element of the conveyor apparatus 100 to which it is attached during the movement of the crossbar 1. The compensation block 61 is preferably configured for at least partially compensating for the vibrations generated at least in the element to which it is attached during the vertical movement of the crossbar 1 when vertical movement of the support 3 is caused with the second linear actuator 5.

In other embodiments, the support 3 is an articulated arm (see Figure 7) or a robot attached to a structure of the installation 2000 with which the conveyor apparatus 100 is associated. In these cases, the movement of the articulated arm (or robot) is caused to generate the required movement of the crossbar 1 for conveying the workpiece.

## Claims

1. Conveyor apparatus for a press installation, the press installation comprising at least a first station (201) and a second station (202) arranged downstream of the first station (201) in a forward movement direction (A) and the conveyor apparatus (100) being configured for conveying at least one workpiece from the first station (201) to the second station (202), said conveyor apparatus (100) comprising a support (3), a crossbar (1) that comprises a longitudinal axis (10) and that is attached to the support (3), and at least a first tool (21) and a second tool (22) attached to the crossbar (1) and comprising a respective longitudinal axis, each tool (21, 22) comprising a plurality of suction cups (20) for holding the workpiece to be conveyed and the crossbar (1) being suitable for moving at least in the forward movement direction (A) between the first station (201) and the second station (202) for conveying the workpiece between said stations (201, 202), the crossbar (1) being supported only by the support (3) and being attached to the support (3) such that said crossbar (1) comprises a first segment (11) on one side of the support (3) and a second segment (12) on the other side of said support (3), the first tool (21) being attached to the first segment (11) of the crossbar (1) and the second tool (22) being attached to the second segment (12) of the crossbar (1), **characterized in that** the conveyor apparatus (100) further comprises at least one compensation block (61) attached to at least one element of the conveyor apparatus (100) selected from the crossbar (1), the first tool (21), and the second tool (22), said compensation block (61) comprising a configuration which passively and at least partially compensates for the vibrations generated at least in the element to which it is attached during the movement of the crossbar (1), the compensation block (61) being fixed to the corresponding element of the conveyor apparatus (100) by means of a structure (65), said compensation block (61) comprising, in addition to the structure (65), a floating mass (60), at least one damper (63) associated with the structure (65) and with the floating mass (60), and at least one elastic element (64) fixed to the floating mass (60) and to the structure (65).

2. Conveyor apparatus according to claim 1, wherein the elastic element (64) is arranged perpendicular to the longitudinal axis of the element of the conveyor apparatus (100) to which the compensation block (61) is attached.

3. Conveyor apparatus according to claim 2, wherein the longitudinal axis of the element of the conveyor apparatus (100) to which the compensation block (61) is attached is a horizontal axis, and the elastic element (64) extends vertically.

4. Conveyor apparatus according to claim 2 or 3, wherein the damper (63) is a magnetic damper and comprises at least one magnet fixed to the mobile mass (60) and a metallic element fixed to the structure (65) of the compensation block (61), said metallic element preferably being made of copper.

5. Conveyor apparatus according to claim 2 or 3, wherein the damper (63) and the elastic element (64) are arranged in parallel, said damper (63) being an element fixed between the floating mass (60) and the structure (65) of the compensation block (61).

6. Conveyor apparatus according to any of claims 1 to 5, wherein the compensation block (61) is attached to the crossbar (1).

7. Conveyor apparatus according to any of claims 1 to 5, comprising a first compensation block (61) attached to the first segment (11) of the crossbar (1) and a second passive compensation block (61) attached to the second segment (12) of the crossbar (1), both compensation blocks (61) preferably being identical to one another.

8. Conveyor apparatus according to claim 7, wherein the first compensation block (61) and the second compensation block (61) are attached to the side of the corresponding segment (11, 12) of the crossbar (1) farthest away from the support (3).

9. Conveyor apparatus according to claim 8, comprising a first tool actuator (71) attached to the first segment (11) of the crossbar (1) and configured for being able to move the first tool (21) with respect to said first segment (11) in a direction parallel to the longitudinal axis (10) of the crossbar (1), and a second tool actuator (72) attached to the second segment (12) of the crossbar (1) and configured for being able to move the second tool (22) with respect to said second segment (12) in said parallel direction, the first tool actuator (71) being arranged above the first segment (11) and the second tool actuator (72) being arranged above the second segment (12).

10. Conveyor apparatus according to any of claims 1 to 9, wherein the support (3) is an articulated arm or a robot configured for being attached to a structure of the press installation (2000) with which the conveyor apparatus (100) is associated and is configured for causing the movement of the crossbar (1).

11. Conveyor apparatus according to any of claims 1 to 9, wherein the support (3) is a beam which is configured for being attached to a structure of the press installation (2000) with which the conveyor apparatus (100) is associated, comprises a longitudinal axis (30) extending in the forward movement direction (A) and transverse to the longitudinal axis (10) of the crossbar (1), the conveyor apparatus (100) further comprising a first linear actuator (4) configured for longitudinally moving the crossbar (1) with respect to the support (3) in the forward movement direction (A), a second linear actuator (5) configured for vertically moving the support (3) and, therefore, the crossbar (1) being moved vertically in a manner that is integral with said support (3), said compensation block (61) comprising a configuration which passively and at least partially compensates for the vibrations generated at least in the element of the conveyor apparatus (100) to which it is attached during the movement of the crossbar (1).

12. Conveyor apparatus according to claim 11, wherein the compensation block (61) is configured for at least partially compensating for the vibrations generated at least in the element to which it is attached during the vertical movement of the crossbar (1) when vertical movement of the support (3) is caused with the second linear actuator (5).

13. Press installation comprising a first station (201), a second station (202) arranged downstream of the first station (201) in a forward movement direction (A), and at least one conveyor apparatus (100) configured for conveying at least one workpiece from the first station (201) to the second station (202), at least one of said stations (201, 202) being a press station configured for performing a pressing operation on said workpiece, **characterized in that** the conveyor apparatus is a conveyor apparatus (100) according to any of claims 1 to 12.

## Patentansprüche

1. Fördervorrichtung für eine Pressenanlage, wobei die Pressenanlage mindestens eine erste Station (201) und eine zweite Station (202) umfasst, die stromabwärts der ersten Station (201) in einer Vorwärtsbewegungsrichtung (A) angeordnet ist, und die Fördervorrichtung (100) zum Befördern mindestens eines Werkstücks von der ersten Station (201) zur zweiten Station (202) ausgebildet ist, wobei die Fördervorrichtung (100) einen Träger (3), eine Querstange (1), die eine Längsachse (10) umfasst und an dem Träger (3) angebracht ist, und mindestens ein erstes Werkzeug (21) und ein zweites Werkzeug (22), die an der Querstange (1) angebracht sind und eine jeweilige Längsachse umfassen, umfasst, wobei jedes Werkzeug (21, 22) eine Vielzahl von Saugnäpfen (20) zum Halten des zu befördernden Werkstücks umfasst und wobei die Querstange (1) geeignet ist, sich mindestens in der Vorwärtsbewegungsrichtung (A) zwischen der ersten Station (201) und der zweiten Station (202) zu bewegen, um das Werkstück zwischen den Stationen (201, 202) zu befördern, wobei die Querstange (1) lediglich von dem Träger (3) getragen wird und an dem Träger (3) so angebracht ist, dass die Querstange (1) ein erstes Segment (11) auf einer Seite des Trägers (3) und ein zweites Segment (12) auf der anderen Seite des Trägers (3) umfasst, wobei das erste Werkzeug (21) an dem ersten Segment (11) der Querstange (1) angebracht ist und das zweite Werkzeug (22) an dem zweiten Segment (12) der Querstange (1) angebracht ist, **dadurch gekennzeichnet, dass** die Fördervorrichtung (100) ferner mindestens einen Kompensationsblock (61) umfasst, der an mindestens einem Element der Fördervorrichtung (100) angebracht ist, das aus der Querstange (1), dem ersten Werkzeug (21) und dem zweiten Werkzeug (22) ausgewählt ist, wobei der Kompensationsblock (61) eine Konfiguration umfasst, die passiv und mindestens teilweise die Schwingungen ausgleicht, die mindestens in dem Element erzeugt werden, an dem er während der Bewegung der Querstange (1) angebracht ist, wobei der Kompensationsblock (61) an dem entsprechenden Element der Fördervorrichtung (100) mittels einer Struktur (65) befestigt ist, wobei der Kompensationsblock (61) zusätzlich zu der Struktur (65) eine schwebende Masse (60), mindestens einen Dämpfer (63), der mit der Struktur (65) und der schwebenden Masse (60) assoziiert ist, und mindestens ein elastisches Element (64) umfasst, das an der schwebenden Masse (60) und an der Struktur (65) befestigt ist.

2. Fördervorrichtung nach Anspruch 1, wobei das elastische Element (64) senkrecht zur Längsachse des Elements der Fördervorrichtung (100) angeordnet ist, an dem der Kompensationsblock (61) angebracht ist.

3. Fördervorrichtung nach Anspruch 2, wobei die Längsachse des Elements der Fördervorrichtung (100), an dem der Kompensationsblock (61) angebracht ist, eine Horizontalachse ist und das elastische Element (64) sich vertikal erstreckt.

4. Fördervorrichtung nach Anspruch 2 oder 3, wobei der Dämpfer (63) ein magnetischer Dämpfer ist und mindestens einen an der beweglichen Masse (60) befestigten Magneten und ein an der Struktur (65) des Kompensationsblocks (61) befestigtes metallisches Element umfasst, wobei das metallische Element vorzugsweise aus Kupfer besteht.

5. Fördervorrichtung nach Anspruch 2 oder 3, wobei der Dämpfer (63) und das elastische Element (64) parallel angeordnet sind, wobei der Dämpfer (63) ein Element ist, das zwischen der schwebenden Masse (60) und der Struktur (65) des Kompensationsblocks (61) befestigt ist.

6. Fördervorrichtung nach einem der Ansprüche 1 bis 5, wobei der Kompensationsblock (61) an der Querstange (1) angebracht ist.

7. Fördervorrichtung nach einem der Ansprüche 1 bis 5, umfassend einen ersten Kompensationsblock (61), der am ersten Segment (11) der Querstange (1) angebracht ist, und einen zweiten passiven Kompensationsblock (61), der am zweiten Segment (12) der Querstange (1) angebracht ist, wobei beide Kompensationsblöcke (61) vorzugsweise untereinander identisch sind.

8. Fördervorrichtung nach Anspruch 7, wobei der erste Kompensationsblock (61) und der zweite Kompensationsblock (61) an der Seite des entsprechenden Segments (11, 12) der Querstange (1) angebracht sind, die am weitesten von dem Träger (3) entfernt ist.

9. Fördervorrichtung nach Anspruch 8, umfassend einen ersten Werkzeugaktuator (71), der an dem ersten Segment (11) der Querstange (1) angebracht ist und ausgebildet ist, um das erste Werkzeug (21) in Bezug auf das erste Segment (11) in einer Richtung parallel zu der Längsachse (10) der Querstange (1) bewegen zu können und einen zweiten Werkzeugaktuator (72), der an dem zweiten Segment (12) der Querstange (1) angebracht ist und ausgebildet ist, um das zweite Werkzeug (22) in Bezug auf das zweite Segment (12) in der parallelen Richtung bewegen zu können, wobei der erste Werkzeugaktuator (71) oberhalb des ersten Segments (11) angeordnet ist und der zweite Werkzeugaktuator (72) oberhalb des zweiten Segments (12) angeordnet ist.

10. Fördervorrichtung nach einem der Ansprüche 1 bis 9, wobei der Träger (3) ein gelenkiger Arm oder ein Roboter ist, der ausgebildet ist, um an einer Struktur der Pressenanlage (2000) angebracht zu werden, mit der die Fördervorrichtung (100) assoziiert ist, und der ausgebildet ist, um die Bewegung der Querstange (1) zu bewirken.

11. Fördervorrichtung nach einem der Ansprüche 1 bis 9, wobei der Träger (3) ein Balken ist, der ausgebildet ist, um an einer Struktur der Pressenanlage (2000) angebracht zu werden, mit der die Fördervorrichtung (100) assoziiert ist, und eine Längsachse (30) umfasst, die sich in der Vorwärtsbewegungsrichtung (A) und quer zur Längsachse (10) der Querstange (1) erstreckt, wobei die Fördervorrichtung (100) ferner einen ersten Linearaktuator (4), der ausgebildet ist, um die Querstange (1) in Bezug auf den Träger (3) in der Vorwärtsbewegungsrichtung (A) zu verschieben, einen zweiten Linearaktuator (5), der ausgebildet ist, um den Träger (3) vertikal zu verschieben, umfasst, wobei die Querstange (1) vertikal in einer Weise bewegt wird, die mit dem Träger (3) einstückig ist, wobei der Kompensationsblock (61) eine Konfiguration umfasst, die passiv und mindestens teilweise die Schwingungen ausgleicht, die mindestens in dem Element der Fördervorrichtung (100) erzeugt werden, an dem er während der Bewegung der Querstange (1) angebracht ist.

12. Fördervorrichtung nach Anspruch 11, wobei der Kompensationsblock (61) ausgebildet ist, um mindestens teilweise die Schwingungen auszugleichen, die mindestens in dem Element erzeugt werden, an dem er während der vertikalen Bewegung der Querstange (1) angebracht ist, wenn die vertikale Bewegung des Trägers (3) mit dem zweiten Linearaktuator (5) bewirkt wird.

13. Pressenanlage umfassend eine erste Station (201), eine zweite Station (202), die stromabwärts der ersten Station (201) in einer Vorwärtsbewegungsrichtung (A) angeordnet ist, und mindestens eine Fördervorrichtung (100), die zum Befördern mindestens eines Werkstücks von der ersten Station (201) zur zweiten Station (202) ausgebildet ist, wobei mindestens eine der Stationen (201, 202) eine Pressenstation ist, die ausgebildet ist, um eine Pressoperation an dem Werkstück durchzuführen, **dadurch gekennzeichnet, dass** die Fördervorrichtung eine Fördervorrichtung (100) nach einem der Ansprüche 1 bis 12 ist.

## Revendications

1. Appareil de transport pour une installation de presse, l'installation de presse comprenant au moins un premier poste (201) et un deuxième poste (202) disposé en aval du premier poste (201) dans une direction de déplacement vers l'avant (A) et l'appareil de transport (100) étant configuré pour transporter au moins une pièce à usiner depuis le premier poste (201) jusqu'au deuxième poste (202), ledit appareil de transport (100) comprenant un support (3), une barre transversale (1) qui comprend un axe longitudinal (10) et qui est attachée au support (3), et au moins un premier outil (21) et un deuxième outil (22) attachés à la barre transversale (1) et comprenant un axe longitudinal respectif, chaque outil (21, 22) comprenant une pluralité de ventouses (20) pour maintenir la pièce à usiner à transporter et la barre transversale (1) étant appropriée pour se déplacer au moins dans la direction de déplacement vers l'avant (A) entre le premier poste (201) et le deuxième poste (202) pour transporter la pièce à usiner entre lesdits postes (201, 202), la barre transversale (1) étant supportée seulement par le support (3) et étant attachée au support (3) de sorte que ladite barre transversale (1) comprend un premier segment (11) sur un côté du support (3) et un deuxième segment (12) sur l'autre côté dudit support (3), le premier outil (21) étant attaché au premier segment (11) de la barre transversale (1) et le deuxième outil (22) étant attaché au deuxième segment (12) de la barre transversale (1), **caractérisé en ce que** l'appareil de transport (100) comprend en outre au moins un bloc de compensation (61) attaché à au moins un élément de l'appareil de transport (100) choisi parmi la barre transversale (1), le premier outil (21) et le deuxième outil (22), ledit bloc de compensation (61) comprenant une configuration qui compense de manière passive, et au moins partiellement, les vibrations générées au moins dans l'élément auquel il est attaché pendant le déplacement de la barre transversale (1), le bloc de compensation (61) étant fixé à l'élément correspondant de l'appareil de transport (100) par le biais d'une structure (65), ledit bloc de compensation (61) comprenant, outre la structure (65), une masse flottante (60), au moins un amortisseur (63) associé avec la structure (65) et avec la masse flottante (60), et au moins un élément élastique (64) fixé à la masse flottante (60) et à la structure (65).

2. Appareil de transport selon la revendication 1, dans lequel l'élément élastique (64) est disposé perpendiculairement à l'axe longitudinal de l'élément de l'appareil de transport (100) auquel est attaché le bloc de compensation (61).

3. Appareil de transport selon la revendication 2, dans lequel l'axe longitudinal de l'élément de l'appareil de transport (100) auquel est attaché le bloc de compensation (61) est un axe horizontal, et l'élément élastique (64) s'étend verticalement.

4. Appareil de transport selon la revendication 2 ou 3, dans lequel l'amortisseur (63) est un amortisseur magnétique et comprend au moins un aimant fixé à la masse mobile (60) et un élément métallique fixé à la structure (65) du bloc de compensation (61), ledit élément métallique étant de préférence fait en cuivre.

5. Appareil de transport selon la revendication 2 ou 3, dans lequel l'amortisseur (63) et l'élément élastique (64) sont disposés en parallèle, ledit amortisseur (63) étant un élément fixé entre la masse flottante (60) et la structure (65) du bloc de compensation (61).

6. Appareil de transport selon l'une quelconque des revendications 1 à 5, dans lequel le bloc de compensation (61) est attaché à la barre transversale (1).

7. Appareil de transport selon l'une quelconque des revendications 1 à 5, comprenant un premier bloc de compensation (61) attaché au premier segment (11) de la barre transversale (1) et un deuxième bloc de compensation passif (61) attaché au deuxième segment (12) de la barre transversale (1), les deux blocs de compensation (61) étant de préférence identiques l'un à l'autre.

8. Appareil de transport selon la revendication 7, dans lequel le premier bloc de compensation (61) et le deuxième bloc de compensation (61) sont attachés au côté du segment (11, 12) correspondant de la barre transversale (1) le plus éloigné du support (3).

9. Appareil de transport selon la revendication 8, comprenant un premier actionneur d'outil (71) attaché au premier segment (11) de la barre transversale (1) et configuré pour être capable de déplacer le premier outil (21) par rapport audit premier segment (11) dans une direction parallèle à l'axe longitudinal (10) de la barre transversale (1), et un deuxième actionneur d'outil (72) attaché au deuxième segment (12) de la barre transversale (1) et configuré pour être capable de déplacer le deuxième outil (22) par rapport audit deuxième segment (12) dans ladite direction parallèle, le premier actionneur d'outil (71) étant disposé au-dessus du premier segment (11) et le deuxième actionneur d'outil (72) étant disposé au-dessus du deuxième segment (12).

10. Appareil de transport selon l'une quelconque des revendications 1 à 9, dans lequel le support (3) est un bras articulé ou un robot configuré pour être attaché à une structure de l'installation de presse (2000) avec laquelle est associé l'appareil de transport (100) et est configuré pour provoquer le déplacement de la barre transversale (1).

11. Appareil de transport selon l'une quelconque des revendications 1 à 9, dans lequel le support (3) est une poutre qui est configurée pour être attachée à une structure de l'installation de presse (2000) avec laquelle est associé l'appareil de transport (100), comprend un axe longitudinal (30) s'étendant dans la direction de déplacement vers l'avant (A) et transversal à l'axe longitudinal (10) de la barre transversale (1), l'appareil de transport (100) comprenant en outre un premier actionneur linéaire (4) configuré pour déplacer longitudinalement la barre transversale (1) par rapport au support (3) dans la direction de déplacement vers l'avant (A), un deuxième actionneur linéaire (5) configuré pour déplacer verticalement le support (3) et, par conséquent, la barre transversale (1) étant déplacée verticalement de sorte qu'elle est solidaire dudit support (3), ledit bloc de compensation (61) comprenant une configuration qui compense de manière passive, et au moins partiellement, les vibrations générées au moins dans l'élément de l'appareil de transport (100) auquel il est attaché pendant le déplacement de la barre transversale (1).

12. Appareil de transport selon la revendication 11, dans lequel le bloc de compensation (61) est configuré pour compenser au moins partiellement les the vibrations générées au moins dans l'élément auquel il est attaché pendant le déplacement vertical de la barre transversale (1) lorsque le déplacement vertical du support (3) est provoqué avec le deuxième actionneur linéaire (5).

13. Installation de presse comprenant un premier poste (201), un deuxième poste (202) disposé en aval du premier poste (201) dans une direction de déplacement vers l'avant (A), et au moins un appareil de transport (100) configuré pour transporter au moins une pièce à usiner depuis le premier poste (201) jusqu'au deuxième poste (202), au moins l'un desdits postes (201, 202) étant un poste de presse configuré pour effectuer une opération de pressage sur ladite pièce à usiner, **caractérisée en ce que** l'appareil de transport est un appareil de transport (100) selon l'une quelconque des revendications 1 à 12.
